# EUROPEAN PATENT APPLICATION

(11) **EP 1 607 669 A2**
(43) Date of publication of application: **21.12.2005**
(21) Application number: 05010228.4
(22) Date of filing: 11.05.2005
(51) Int. Cl.: F16L 13/14

(54) **Press fitting for pipes in hydraulic systems**

(30) Priority: 17.06.2004 IT MI20040298 U
(71) Applicant: Far Rubinetterie S.P.A., 28024 Gozzano (NO) (IT)
(72) Inventor: Allesina, Guerrino, 28024 Gozzano (NO) (IT)
(74) Representative: Coloberti, Luigi

(57) **Abstract**

A compression fitting (10) for connection of plastic material, and/or multilayer pipes (13) in hydraulic, plumbing and/or heating systems; the fitting (10) comprises a tubular body (11) having at least one pipe support sleeve (12), and a pressure sleeve (17) coaxially arranged around the pipe support sleeve (12). The pipe support sleeve (12) is provided with a first and a second sealing gaskets (14) in seating grooves (15), each providing one or more axially extending compression areas to seal against an inner surface of the pipe (13).

## Description

### BACKGROUND OF THE INVENTION

This invention relates to a compression fitting for connection of plastic and multilayer pipes in hydraulic, plumbing and/or heating systems, which can be used in particular for connecting pipes to one another and/or to parts of a hydraulic system, by means of an appropriate pressing tool.

### PRIOR ART

Compression fittings for plastic and/or multilayer pipes are widely in use and described, for example in DE-A-195 45 361, and WO-A-03/012328.

In particular, DE-A-195 45 361 describes a compression fitting comprising a hollow body screwable into a hole, provided with a pipe support sleeve for connection to a pipe end; a metal pressure sleeve coaxially arranged to surround the pipe end and the support sleeve, may be radially compressed and crimped for tightening the pipe end against two O-rings seated into peripheral grooves provided on an outer surface of the pipe support sleeve. The pipe support sleeve is provided with an outer toothing for axially retaining the pipe end.

A compression fitting of this kind however presents a number of drawbacks which jeopardises the sealing between the support sleeve and the pipe, whenever the pipe is not correctly positioned on the support sleeve, and an improper use of a pressure tool is made.

In fact, the use of usual O-rings type provides a limited sealing surface, and consequently, when the compression sleeve is tightened with the pipe against the support sleeve, a satisfactory seal is achieve only if the pipe end is perfectly pressed against the O-rings by an appropriate pressing tool.

However, this does not always occur, in that different types and differently shaped pressing tools are presently in use, each conformed to press a correspondingly shaped pressure sleeve; the jaws of the tool are also conformed to press only in correspondence with given annular portions only of the pressure and support sleeves; therefore, it may occur that the pressure sleeve is not adequately compressed in correspondence with the annular gaskets on the support sleeve, thereby causing leakages or sealing problems in the connection of the compression fitting to a pipe.

This problem is particularly stressed in that operators very often make use of different types of tools made by different manufacturers, each provided with differently shaped jaws, with the result that the pressure sleeves are tightened at pressing points differently positioned in respect to the O-rings, depending on the type of tool.

Moreover, during the assembling of the compression fitting, it is necessary to pay a certain amount of attention to ensure that the pressure sleeve is correctly fitted onto the pipe end, and suitably oriented in respect to a shoulder or stop surface.

The compression fitting described in WO-A-03/012328 substantially presents the same previously mentioned drawbacks; in fact, this compression fitting also comprises a tubular body having a pipe support sleeve for connection to a pipe end, and a radially compressible metal pressure sleeve for tightening the pipe end against two O-rings on the support sleeve.

Moreover, the pressure sleeve is provided with anchoring means for anchoring to the body of the fitting, and apertures for controlling the position of the pipe at one end only of the pressure sleeve.

### OBJECTS OF THE INVENTION

An object of this invention is to provide a compression fitting for pipes of plastic material and/or multilayer pipes for hydraulic, plumbing, and/or heating systems, which is structurally simple and whereby it makes it possible to achieve an improved seal between the compression fitting and a pipe.

A further object of the invention is to provide a compression fitting for pipes and the like, for universal use, to provide a good sealing regardless of the type of pressing tool used for crimping the pressure sleeve.

### BRIEF DESCRIPTION OF THE INVENTION

The above can be achieved by means of a compression fitting for pipes of plastic material, and/or multilayered pipes, according to claim 1.

More precisely, according to the invention, a compression fitting has been provided, comprising:
a tubular body having at least one pipe support sleeve provided with peripheral seating grooves on an outer surface for containing a sealing gasket, said seating grooves having bottom and side surfaces;
a metal pressure sleeve coaxially arranged around the support sleeve for sealingly gripping a pipe end against the pipe support sleeve,
characterised in that:
the sealing gasket comprises an elastically yieldable annular body having flat inner and side surfaces sealingly matching with said bottom and side surfaces of the seating groove, and shaped outer surface to seal against an inner surface of the pipe end;
said shaped outer surface of the gasket being conformed to provide at least one compression area arranged, between the side surfaces of the seating groove.

Further features of the compression fitting are defined by the dependent claims.

### BRIEF DESCRIPTION OF THE DRAWINGS

These and further features of the invention, will be more clearly evident from the following description, with reference to the accompanying drawings, in which:
- Fig. 1 shows a longitudinal cross-sectional view of a first embodiment of a compression fitting according to the invention;
- Fig. 2 shows the compression fitting of fig. 1, in which a pipe end is inserted onto the support sleeve in an unpressed condition;
- Fig. 3 shows the compression fitting of Fig. 2, in which the pressure sleeve is crimped for tightening the pipe end against the support sleeve;
- Fig. 4 shows an embodiment of a two-way compression fitting according to the invention;
- Fig. 5 shows an enlarged detail of the seating and gasket of a compression fitting according to the, invention;
- Fig. 6 shows an enlarged detail for a second embodiment of the seating and the gasket;
- Fig. 7 shows an enlarged detail for a third embodiment of the seating and the gasket;
- Fig. 8 shows a longitudinal cross-sectional view for a second embodiment of a compression fitting according to the invention;
- Fig. 9 shows the compression fitting of fig. 8 with the pipe before crimping;
- Fig. 10 and 11 show the same compression fitting of fig. 9 in a compressed condition by the use of two different pressing tools.

### DETAILED DESCRIPTION OF THE INVENTION

The general features of the compression fitting according to the invention will be illustrated hereunder by means of several embodiments, relating to the compression fitting per se; nevertheless, the compression fitting may be conformed as an integral part of a tap or valve device.

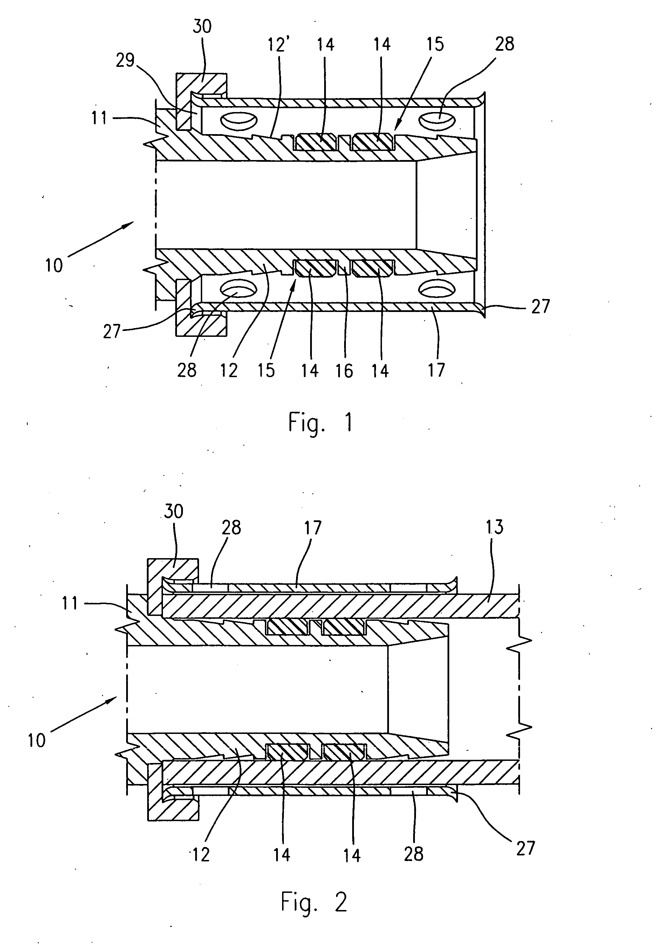

Fig. 1 shows a compression fitting for the watertightening connection of pipes of plastic material, or multilayered pipes for hydraulic, plumbing and/or heating systems, according to the invention.

The compression fitting, as a whole indicated by reference number 10, comprises a tubular body 11 having at least one pipe support sleeve 12 at one end for a pipe 13 threaded on or inserted onto the same support sleeve 12; the support sleeve 12 is provided with a toothed outer surface 12' suitably shaped to firmly allow a mechanical anchoring of the internal surface of the pipe 13 to the support sleeve.

In order to ensure the necessary hydraulic seal, the outer surface 12' of the support sleeve 12 is provided with at least one annular sealing gasket, preferentially a first and a second gasket 14, each housed in axially spaced apart annular seat 15 formed on the outer peripheral surface 12', in an intermediate position of the aforesaid pipe support sleeve 12.

The gasket 14 is preferentially spaced apart by an annular rib 16 provided on the outer surface 12' of the pipe support sleeve 12, between the seating grooves 15 to reduce the frictional force which is generated between the sealing gaskets 14 and the inner surface of the pipe 13 during the insertion or threading of the pipe 13 end onto the support sleeve 12.

The compression fitting 10 also comprises a radially deformable metal pressure sleeve 17 for tightening the pipe 13, coaxially disposed around the pipe support sleeve 12.

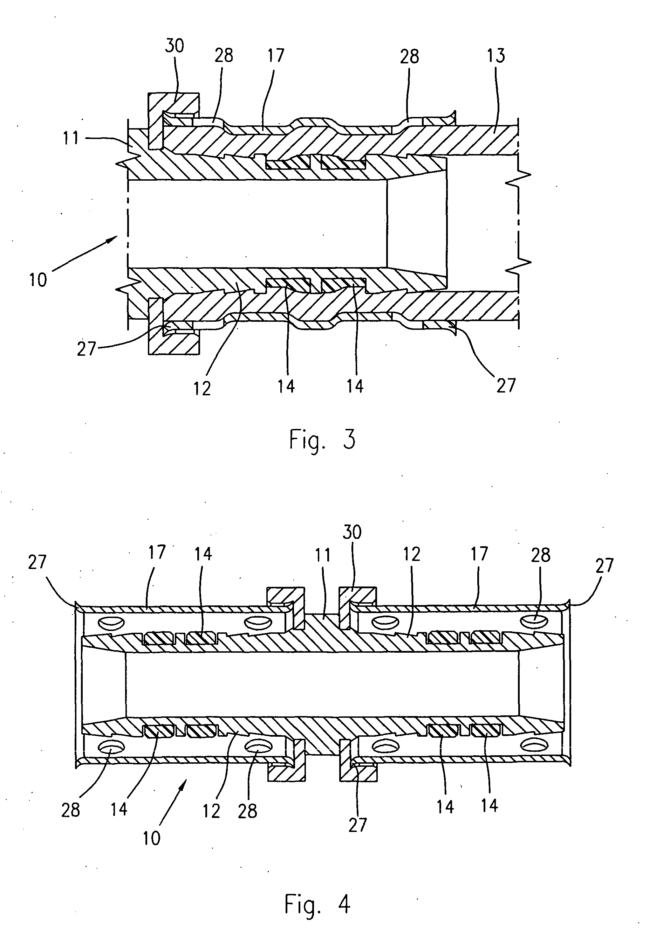

The pressure sleeve 17 can be crimped and tightened to seal the pipe end 13 against the sealing gaskets 14 and the toothing 12' of the support sleeve 12, by means of a suitable pressing tool as will be explained further on, in such a way as to tightly lock and permanently connect one end of the pipe 13 to the compression fitting 10, as shown in fig. 3.

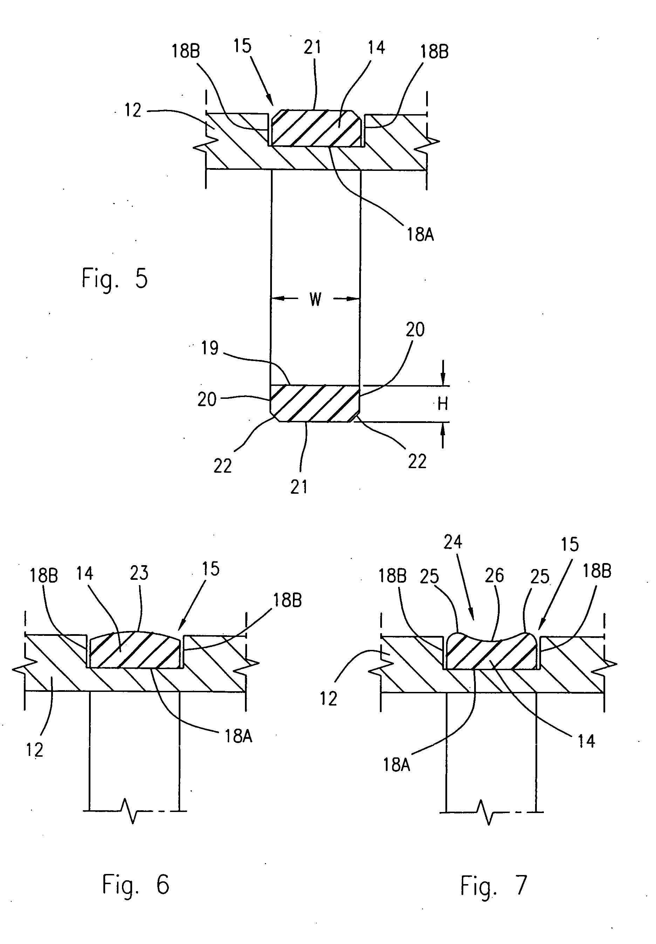

With reference to figures 5, 6 and 7 we will describe now some innovative features and embodiments of the seating grooves and annular gasket according to the invention.

As shown in the first embodiment of fig. 5, the seating groove 15 comprises a cylindrical or flat bottom surface 18A and flat side surfaces 18B radially extending from the bottom surface 18A up to the peripheral outer surface 12' of the pipe support sleeve 12.

The bottom surface 18A of the seating groves 15 extends axially for a length greater than the height of the side surfaces 18, to provide a large compression and sealing area, or one or more compression and sealing areas for the sealing gasket 14.

More precisely, as shown in fig. 5, the sealing gasket 14 comprises a ring body in elastomeric or elastically yielding material, having a cross-section suitably shaped to provide a sealing against the three flat bottom and side surfaces 18A and 18B of the seating grove 15, and a large outer surface for sealing against the inside of the pipe end 13.

More precisely, in the embodiment of fig. 5, the ring body of the gasket 14, comprises an inner flat surface 19 and flat side surfaces 20 conforming and adhering to the flat bottom and side surfaces 18A and 18B of the seating groove 15. The ring body of the gasket 14 comprises also an outer shaped surface 21 having a flat cross-outline which substantially extends for the entire axial width of the ring to provide a large compression and sealing area for the pipe end 13.

To provide a good sealing, the outer surface 21 of the gasket 14, slightly protrudes from the outer surface 12' of the support sleeve 12, for example of some tenths of millimetres, as shown; to avoid any damage to the gasket during the insertion of the pipe end, the gasket 14 is provided with bevelled edges 22 at both ends of the outer surface 21.

To provide the best sealing conditions, depending on the diameter of the outer surface 21 of the gasket, the axial width W of the ring body may range for example from 3 to 5 mm, while the radial thickness H of the cross-section may be selected for example from 1,2 and 2,5 mm for pipes having an inside diameter comprised for example between 14 to 60 mm.

Fig. 6 of the drawing shows a second embodiment for the sealing gasket 14; in fig. 6 the same reference numbers of fig. 5 have been used for the same or corresponding parts.

The solution of fig. 6 differs from the solution of fig. 5, in that the gasket 14 of fig. 6 comprises an outer surface 23 providing a rounded cross-outline and pressing area protruding from the outer surface 12 of the support sleeve 12; again, the surface 23 axially extends for a width W slightly smaller than or equal to the axial width of the seating groove 15, as per example of fig. 5.

A third solution of the sealing gasket 14 is shown in fig. 7, where the same reference numbers of figures 5 and 6 have been again used for corresponding parts.

The solution of fig. 7 again differs from the solution of figures 5 and 6 for the different shape of the outer surface 24, while maintaining a large compression and sealing area as per previous cases.

More precisely in the case of fig. 7, the cross-section outer outline of the surface 24 is in the shape of a saddle, comprising two cross-rounded annular ribs 25 at the distal ends of the ring body of the gasket 14, defining two corresponding compression and sealing areas spaced apart by an intermediate inwardly rounded peripheral throat 26.

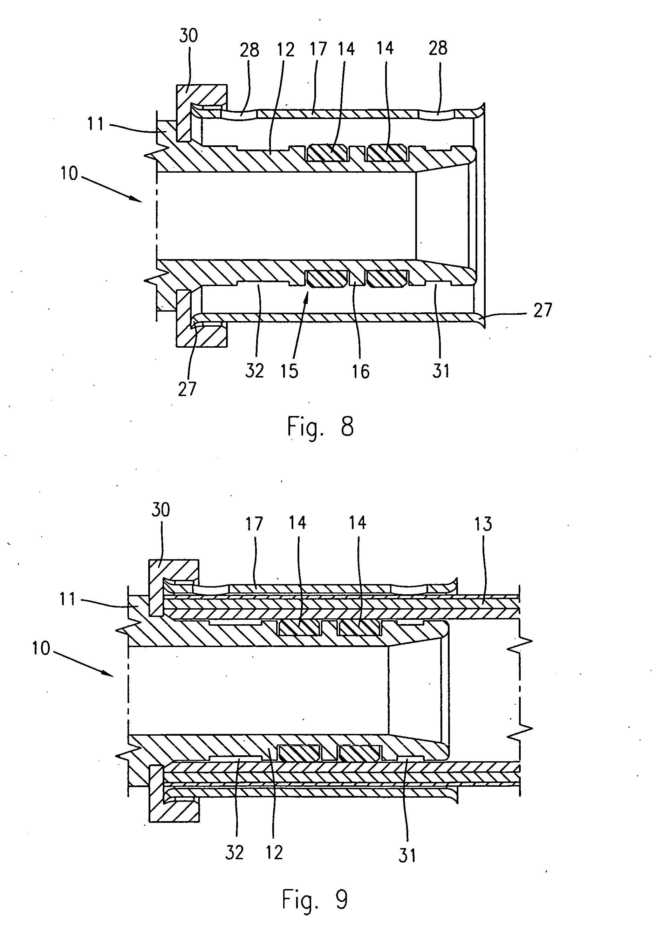

Thanks to the use of a ring body for the gasket 14, having flat inner and side surfaces for sealing against corresponding flat bottom and side surfaces of the seating groove, and a shaped outer surface axially extending to provide a large compression and sealing area or areas, the seal between the pipe 13 and the support sleeve 12 of the compression fitting is always optimal, in that the outer sealing surface of the gasket 14 provides a large sealing area or areas which extend in an axial direction for a greater extend compared to an O-ring; consequently, when the compression sleeve is crimped by a pressing tool, the pipe end 13 is securely tightened against a large portion of the outer surface of the ring body of one or both gaskets 14, as shown in fig. 3, regardless of the type of pressing tool used, even in the event of imperfect tightening of the pressure sleeve 17 against the support sleeve 12 as will be explained further on, with reference to figures 8 to 11.

As shown in fig. 1 the pressure sleeve 17 may be provided with anchoring means for fastening the same pressure sleeve 17 to the body 11 of the compression fitting 10, more properly to a stop ring to prevent axial dislodgment of the same pressure sleeve 17 and pipe end 13 clamped against the toothing of the support sleeve 12.

In order to simplify the assembling of the pressure sleeve 17 onto the compression fitting 10, the sleeve 17 regardless its disposition is provided with anchoring means in the form of an outwardly oriented edge 27 and control apertures 28 at both distal ends, so as to be reversibly fittable, since the sleeve 17 can be oriented either way when it is anchored to the body 11 of the compression fitting 10.

In the case shown, the anchoring means for the sleeve 17 comprise a sharp edge 27, at both ends of the sleeve 17. The fastening of the sleeve 17 to the body 11 of the fitting 10 is made in such a way that the sharp edge 27 facing the body 11 of the fitting is fitted into an annular groove 29 inside a stop ring 30 urged against a shoulder surface of the body 11.

As an alternative solution the sharp edge 27 of the sleeve 17 facing towards the body 11 of the fitting 10 may directly engages with an annular anchoring seat provided on the tubular body 11.

As shown in figures 5, 6 and 7, each gasket 14 extends along the support sleeve 12 for a length greater than the thickness of the ring body 14 of the gasket for example with a ratio W/H ranging from 1,2 to 5 or more.

The compression fitting 10 according to the invention can be differently shaped according to different requirement; in particular, the compression fitting can be of one way or of two-way, in which the two pipe support sleeves are axially aligned or forming an angle with each other, or with two or more pipe support sleeves for a corresponding number of pipes, such as a three-way or "T" shaped type.

Fig. 4 for example, shows a two-way compression fitting 10 for connecting together two pipes 13; in fig. 4 the same reference numbers of the figures 1 to 3 have been used for the same or similar parts.

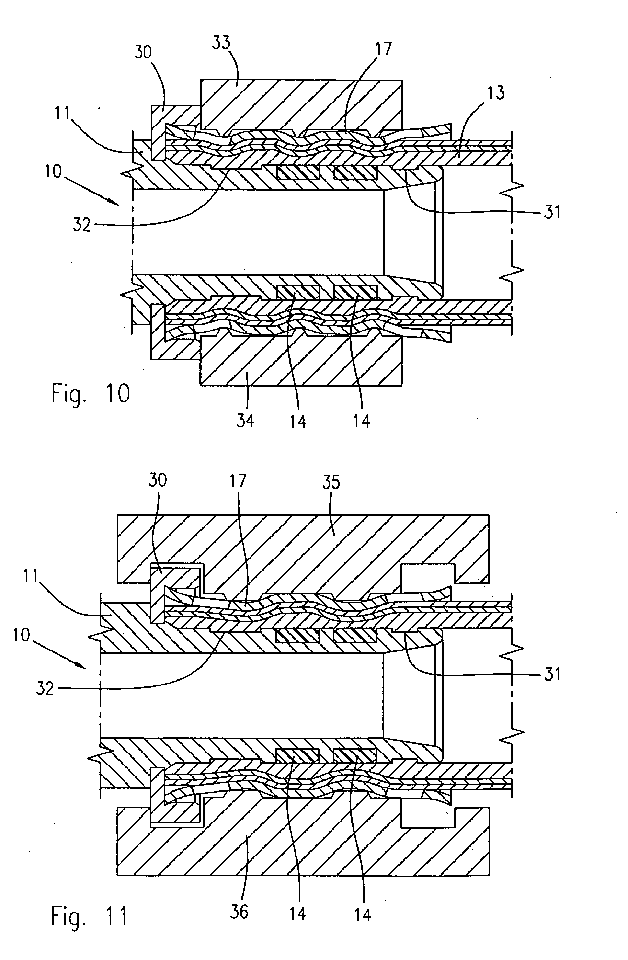

The figures 8 to 11 show a compression fitting 10 having a differently shaped pipe support sleeves 12; again in figures 8 to 11 the same reference numbers of fig. 1 have been used for corresponding or similar parts; figures 10 and 11 show also the use of pressing tools of different type with a same compression fitting.

As shown in fig. 8, according to this embodiment, the pipe support sleeve 12, in substitution of the toothed outer surface 12 of fig. 1 for mechanically gripping a plastic or multilayer pipe 13, now comprises a first groove 31 on the peripheral outer surface, close to the fore end of the sleeve, and a second peripheral groove 32 at the opposite end.

The grooves 31 and 32 may be of the same width and depth or may have different width and different depth.

Fig. 9 shows the same compression fitting 10 of fig. 8, with the pipe 13 threaded or inserted onto the support sleeve 12, urged against the stop ring 30, and with the pressure sleeve 17 and the same pipe 13 in an uncompressed condition.

Figures 10 and 11 show the same compression fitting 10 in a compressed condition by means of the jaws 33, 34 and 35, 36 of two different pliers or gripping devices, suitably conformed for compressing the pressure sleeve 17 and the pipe end 13, in correspondence of the gaskets 14 and the retaining grooves 31, 32 of the pipe support sleeve 12.

What has been described and shown with reference to the accompany drawings, has been given purely by way of example in order to illustrate the general features of the invention, and several of its preferential embodiments; therefore other modifications and variations to the compression fitting or components thereof without thereby deviating from the scope of the claims.

## Claims

1. A compression fitting (10) for plastic and multilayer pipes (13), comprising:
a tubular body (11) having at least one pipe support sleeve (12) provided with peripheral seating grooves (15) on an outer surface for sealing gasket (14), said seating grooves (15) having bottom and side surfaces (17, 18);
a pressure sleeve (17) coaxially arranged around the support sleeve (12) for sealing gripping a pipe end (13) against the pipe support sleeve (12),
**characterised in that**:
each sealing gasket (14) comprises an elastomeric ring body having flat inner and side surfaces (19, 20) sealingly adhering to said bottom and side surfaces (17, 18) of the seating groove (15), and a shaped outer surface (21; 23; 24) to seal against an inner surface of the pipe end (13);
said shaped outer surface (21; 23; 24) of the gasket (14) being conformed to provide at least one compression area arranged between the side surfaces (18) of the seating groove (15).

2. The compression fitting according to claim 1, **characterised in that** the sealing gasket (14) comprises an outer cylindrical surface (21) defining a flat-shaped compression area.

3. The compression fitting according to claim 2, **characterised in that** the outer surface of the sealing gasket (14) is provided with bevelled side edges (22).

4. The compression fitting according to claim 1, **characterised in that** the sealing gasket (14) comprises a cylindrical outer surface (23) provided with a cross-rounded compression area.

5. The compression fitting according to claim 1, **characterised in that** the sealing gasket (14) comprises a shaped outer surface (24) having axially spaced apart compression areas (25).

6. The compression fitting according to claim 5 **characterised in that** said compression areas (25) are provided by annular ribs.

7. The compression fitting according to claim 6, **characterised in that** said compression areas are provided by cross-rounded annular ribs (25).

8. The compression fitting according to claim 1, **characterised in that** the pressure sleeve (17) is provided with apertures (18) at both ends.

9. The compression fitting according to claim 1, **characterised in that** the pressure sleeve (17) is provided with a sharp edge (19) for anchoring to a stop ring (30)

10. The compression fitting according to claim 1, **characterised in that** axial width (W) of the ring body of gasket (14) is greater than the thickness (H) of the same ring body.

11. The compression fitting according to claim 10, **characterised in that** the ratio (W/H) between the width (W) and the thickness (H) of the ring body of the gasket (14), is comprised between 1, 2 and 5.

12. The compression fitting according to claim 1, **characterised in that** the tubular body (11) of the fitting (10) comprises at least one pipe support sleeve (12).

13. The compression fitting according to claim 12 **characterised by** comprising a first and a second axially aligned pipe support sleeves (12).

14. The compression fitting according to claim 12, **characterised by** comprising at least a fist and a second differently oriented pipe support sleeves (12).

15. The compression fitting according to claim 1, **characterised in that** the tubular body (11) of the fitting is provided as an integral part of a tap or valve device.
